# EUROPÄISCHE PATENTSCHRIFT

(11) **EP 3 138 738 B1**
(45) Veröffentlichungstag und Bekanntmachung des Hinweises auf die Patenterteilung: **02.05.2018**
(21) Anmeldenummer: 16185145.6
(22) Anmeldetag: 22.08.2016
(51) Int. Cl.: B60R 9/10, B60R 9/06, F16B 2/08, F16B 2/10

(54) **FAHRRADBEFESTIGUNGSVORRICHTUNG**
BICYCLE FIXING DEVICE
DISPOSITIF DE FIXATION DE VELO

(30) Priorität: 26.08.2015 DE 202015104516 U
(43) Veröffentlichungstag der Anmeldung: 08.03.2017
(73) Patentinhaber: Fiamma S.p.A., 21010 Cardano al Campo (VA) (IT)
(72) Erfinder: Pozzi, John-David, 8004 Zürich (CH); Pozzi, Charles Philip, 20129 Mailand (IT)
(74) Vertreter: Kluin, Jörg-Eden

(56) Entgegenhaltungen:
- WO-A1-2014/096346
- WO-A1-2015/124915
- DE-A1-102008 044 702

## Beschreibung

Die Erfindung betrifft eine Fahrradbefestigungsvorrichtung zur Befestigung eines Fahrrades an einem Fahrradträger sowie einen Fahrradträger.

Derartige Fahrradbefestigungsvorrichtungen und Fahrradträger sind bereits bekannt. Beispielsweise zeigt die DE 10 2008 044 702 A1 einen Fahrradträger mit einer derartigen Fahrradbefestigungsvorrichtung, gemäß dem Oberbegriff des Patantanspruchs 1. Aus der WO 2015/124915 A1 ist eine weitere Befestigungsvorrichtung eines Fahrradträgers bekannt. Nachteilig hierbei ist die relativ umständliche Bedienung bzw. Zugänglichkeit der Arretierungsmittel des Fahrradträgers in einem am Fahrzeug montierten Zustand.

Die Erfindung hat es sich zur Aufgabe gemacht, eine Fahrradbefestigungsvorrichtung und einen Fahrradträger mit einer Fahrradbefestigungsvorrichtung zu schaffen, bei denen der Bedienkomfort noch weiter erhöht ist und/oder bei denen die Belastbarkeit und/oder Haltbarkeit noch weiter gesteigert wurde.

Diese Aufgabe wird durch die in Anspruch 1 wiedergegebene Fahrradbefestigungsvorrichtung und den in Anspruch 6 wiedergegebenen Fahrradträger gelöst.

Die erfindungsgemäße Fahrradbefestigungsvorrichtung dient zur Befestigung eines Fahrrades an einem Fahrradträger. Fahrräder werden üblicherweise an verschiedenen Stellen mit einem Fahrradträger befestigt. Meist werden die Laufräder an dem Fahrradträger befestigt und der Fahrradrahmen. Die erfindungsgemäße Fahrradbefestigungsvorrichtung dient bevorzugt zur Befestigung eines Fahrrades mit dem Fahrradrahmen an einem Fahrradträger. Sie weist einen Verbindungsarm auf, an dem Anschlusselemente angeordnet sind. Der Verbindungsarm wird im Rahmen dieser Druckschrift auch kurz als Arm bezeichnet. Bevorzugt ist an jedem der beiden Enden des Verbindungsarms jeweils genau ein Anschlusselement angeordnet.

Die Anschlusselemente umfassen ein Klemmbauteil zur Verbindung des Arms mit dem Fahrradträger. Bevorzugt ist genau eines der beiden Anschlusselemente als derartiges Klemmbauteil ausgeführt.

Das Klemmbauteil weist eine Klemmschraube auf, die mittels eines Drehknopfes per Hand bedienbar ist. Das Klemmbauteil umfasst eine Schelle, die mit Hilfe des Drehknopfes enger oder weiter stellbar ist. Auf diese Weise ist die Schelle bevorzugt an dem übrigen Fahrradträger klemmbar. Die Schelle ist mit Vorteil drehfest an dem übrigen Fahrradträger klemmbar.

Die Schelle umfasst zwei schwenkbar zueinander gelagerte Backen und der Abstand der Backen ist durch Betätigen des Drehknopfes veränderbar, so dass eine besonders belastbare Schelle geschaffen ist.

Erfindungsgemäß ist der Drehknopf auf der dem Verbindungsarm zugewandten Seite des Klemmbauteils angeordnet. Während der Befestigung eines Fahrrades auf einem Fahrradträger ist der Befestigungsarm bevorzugt dem Nutzer zugewandt. Indem der Drehknopf auf der gleichen Seite wie der Verbindungsarm des Klemmbauteils angeordnet ist, ist er von dem Nutzer besonders komfortabel zu erreichen und daher kraftvoll zu betätigen. Der Drehkopf kann entweder als Mutter ausgebildet sein, die auf ein Gewindeelement aufschraubbar ist. Oder der Drehkopf umfasst ein Gewindeelement, das in eine Mutter eindrehbar ist.

Als Anschlusselement ist mit Vorteil zusätzlich zu dem Klemmbauteil - bevorzugt ausschließlich genau - ein Verbindungsbauteil vorgesehen, welches den Arm mit einem Fahrradrahmen befestigt. Das Verbindungsbauteil ist mit Vorteil am anderen Ende des Arms als das Klemmbauteil angeordnet.

Der Verbindungsarm ist bevorzugt rohrförmig. Der Arm umfasst bevorzugt Aluminium. Die Anschlusselemente umfassen mit Vorteil Kunststoff. Die Bereiche des Arms - bevorzugt seine beiden Endbereiche - in denen der Arm mit den Anschlusselementen verbunden ist, werden im Rahmen dieser Druckschrift auch als Verbindungsbereiche des Arms bezeichnet.

Die Länge des Arms ist bevorzugt größer als der zweifache, vierfache, fünffache oder zehnfache Durchmesser des Arms. Die Vorteile der Erfindung kommen bei einem derart langen Arm, bei dem aufgrund der Hebelwirkung große Kräfte zwischen Arm und Klemmbauteil wirken, besonders zur Geltung.

Die Backen weisen mit Vorteil eine Aufnahme für den Fahrradträger auf. Diese Aufnahme kann als Ausnehmung in den Backen ausgebildet sein, die komplementär zu dem Bereich des übrigen Fahrradträgers ausgebildet ist, an dem die Schelle bestimmungsgemäß geklemmt ist. Mit Vorteil weist dieser Bereich eine zylindrische Form auf und die Ausnehmungen der beiden Backen haben zusammen etwa hohlzylindrische Form.

Die Backen sind an einer Seite der Aufnahme bevorzugt mittels eines Gelenks schwenkbar zueinander gelagert. Diese Seite wird im Rahmen dieser Druckschrift auch als Gelenkseite bezeichnet. Auf die auf der anderen Seite der Aufnahme liegende Seite wirkt die Klemmschraube. Diese Seite wird im Rahmen dieser Druckschrift auch als Klemmschraubenseite bezeichnet. Die Backen sind also bevorzugt auf einer Seite mittels eines Gelenks verbunden und weiter bevorzugt auf der gegenüberliegenden Seite mittels der Klemmschraube.

Mit Vorteil erstrecken sich die Backen auf der Klemmschraubenseite der Aufnahme weiter, als auf der Gelenkseite der Aufnahme. Die Klemmschraube ist mit Vorteil also weiter von der Aufnahme entfernt, als das Gelenk. Die Aufnahme ist mit Vorteil also nicht mittig in den Backen angeordnet. Die Backen erstrecken sich auf der Seite der Klemmschraube der Aufnahme bevorzugt mehr als 1,5-mal so weit, wie auf der anderen Seite. Auf diese Weise ist Platz für den Drehknopf der Klemmschraube geschaffen.

Einander zugewandte Flächen der Backen verlaufen im geklemmten Zustand der Schelle mit Vorteil zumindest in etwa in einer senkrecht zur Längserstreckung des Arms in seinem Klemmbauteil-Verbindungsbereich ausgerichteten Ebene oder parallel hierzu.

Der Winkel zwischen der Längserstreckung oder der Rotationsachse der Klemmschraube und der Längserstreckung des Arms in dem Klemmbauteil-Verbindungsbereich ist mit Vorteil kleiner als 90° oder als 45°.

Die Längserstreckung der Klemmschraube verläuft im geklemmten Zustand der Schelle mit Vorteil schräg zur Längserstreckung des Arms im Klemmbauteil-Verbindungsbereich. Die Klemmschraube ist mit Vorteil mit dem Betätigungsknopf von diesem Verbindungsbereich des Arms weggeneigt. Hierdurch ist mehr Platz für den Drehknopf und die Hand des Nutzers beim Betätigen des Drehknopfes geschaffen.

Die Längserstreckung der Klemmschraube verläuft mit Vorteil nicht senkrecht zu den einander zugewandten Seiten der Backen. Durch diese Schrägneigung der Klemmschraube ist mit Vorteil mehr Platz für den Drehknopf der Klemmschraube geschaffen. Es hat sich gezeigt, dass die hiermit verbundenen geringfügigen Nachteile bei der Kraftübertragung der Klemmschraube auf die Backen zugunsten der besseren Bedienbarkeit des Drehknopfes tolerierbar sind.

Die Klemmschraube dient bevorzugt ausschließlich der Klemmung des Klemmbauteils am Fahrradträger. Die Klemmschraube dient mit Vorteil nicht auch zur Befestigung des Arms am Klemmbauteil. Die Klemmschraube wirkt mit Vorteil nicht auf den Arm. Die Klemmschraube durchgreift den Arm mit Vorteil nicht.

Eine Ausgestaltung der Erfindung betrifft auch eine Fahrradbefestigungsvorrichtung zur Befestigung eines Fahrrades - bevorzugt mit dem Fahrradrahmen - an einem Fahrradträger, mit einem Verbindungsarm, an dem Anschlusselemente angeordnet sind, wobei eine drehbare Verbindung zwischen dem Arm und einem Anschlusselement dadurch bewirkt ist, dass ein eine Drehachse definierender Vorsprung vorgesehen ist.

Durch die Drehverbindung erhält der Arm mit Vorteil die während des Befestigungsvorgangs eines Fahrrades nötige Einstellungsfreiheit.

Die Verbindung ist mit Vorteil um 360° drehbar.

Der Vorsprung ist mit Vorteil axial und radial gelagert.

Mit Vorteil definiert der Vorsprung eine Drehachse und ist weiter bevorzugt als Bolzen ausgeführt. Die Länge des Vorsprungs ist mit Vorteil größer als der Durchmesser des Arms. Auf diese Weise ist eine Voraussetzung dafür geschaffen, dass Biegekräfte zwischen dem Arm und dem Anschlusselement gut aufgenommen werden können.

Grundsätzlich ist denkbar, dass der Vorsprung fest an dem Arm angeordnet ist. Bevorzugt ist der Vorsprung jedoch fest an dem Anschlusselement angeordnet. Das Anschlusselement umfasst bevorzugt also den Vorsprung. Der Vorsprung erstreckt sich weiter bevorzugt in das Innere des Verbindungsarms hinein.

Die Längserstreckung des Vorsprungs stimmt mit Vorteil mit der Längserstreckung des Verbindungsarms im jeweiligen Verbindungsbereich des Arms überein. Der Vorsprung ist mit Vorteil fest an dem Anschlusselement angeordnet. Der Vorsprung kann sich aus einem einstückig mit dem übrigen Anschlusselement ausgestalteten Kunststoffbereich und einem diesen verlängernden Metallbereich zusammensetzen. Hierdurch kann eine besondere Belastbarkeit erzielt sein.

Die drehbare Verbindung zwischen dem Arm und dem Anschlusselement umfasst mit Vorteil Axiallager und Radiallager, jeweils bevorzugt als Gleitlager ausgebildet.

Das Anschlusselement stellt mit Vorteil Axiallagerflächen und weiter bevorzugt auch Radiallagerflächen bereit, bevorzugt jeweils genau zwei. Die Radiallagerflächen oder Bereiche hiervon können in Richtung der Längserstreckung des Vorsprungs zumindest in etwa um die Länge des Vorsprungs beabstandet sein.

Eine erste Axiallagerfläche des Anschlusselements kann durch eine an dem freien Ende des Vorsprungs befestigbare Beilagscheibe ausgebildet sein.

Eine zweite Axiallagerfläche des Anschlusselements kann durch eine ringförmige, um den Fuß des Vorsprungs verlaufende Fläche des Anschlusselements gebildet sein.

Eine erste Radiallagerfläche des Anschlusselements kann durch eine mit Vorteil zylindrische Mantelfläche des Vorsprungs, insbesondere durch in der Nähe seines freien Endes angeordnete Bereiche hiervon, gebildet sein.

Eine zweite Radiallagerfläche des Anschlusselements ist mit Vorteil als um den Fuß des Vorsprungs herum angeordnete Erhebung ausgeführt. Die Erhebung kann eine hohl-zylindrische Form aufweisen. Die Radiallagerfläche kann durch die Innenfläche der Erhebung gebildet sein.

Wenn der Arm fest mit einem Drehverbinder verbunden ist, der drehbar an einem Anschlusselement gelagert ist, dann kann eine besondere Belastbarkeit erzielt sein. Der Drehverbinder ist mit Vorteil drehbar zumindest auch an dem Vorsprung gelagert. Der Drehverbinder ist mit Vorteil zylindrisch, besonders bevorzugt hohlzylindrisch ausgebildet. Der Drehverbinder umfasst bevorzugt Kunststoff oder ist aus diesem gebildet. Er kann mit dem Arm verklebt und/oder verpresst und/oder vergossen sein. Der Drehverbinder ist mit Vorteil im Inneren des Arms angeordnet und schließt weiter bevorzugt zumindest nahezu bündig mit dem entsprechenden Ende des Arms ab.

Der Drehverbinder stellt mit Vorteil Gegen-Radiallagerflächen und Gegen-Axiallagerflächen bereit, die mit den Axiallagerflächen und Radiallagerflächen des Anschlusselements zusammenwirken.

Eine erste Gegen-Axiallagerfläche des Drehverbinders kann durch einen Anschlag gebildet sein, in Form einer senkrecht zur Achse des Drehverbinders ausgerichteten Fläche. Dieser Anschlag kann durch die von dem freien Ende des Arms, in dem der Drehverbinder angeordnet ist, wegweisende Stirnseite des Drehverbinders gebildet sein. Der Anschlag kann im Inneren des Drehverbinders angeordnet sein, gebildet etwa durch die Schulter einer Axialbohrung des Drehverbinders, auf der die Beilagscheibe aufliegen kann.

Eine zweite Gegen-Axiallagerfläche des Drehverbinders kann durch die zu dem freien Ende des Arms, in dem der Drehverbinder angeordnet ist, hinweisende Stirnseite des Drehverbinders gebildet sein, die bevorzugt zumindest in etwa bündig mit dem freien Ende des Arms abschließt. Diese Gegen-Axiallagerfläche ist bevorzugt in Kontakt mit der ringförmigen, um den Fuß des Vorsprungs verlaufenden Fläche des Anschlusselements.

Das Anschlusselement stellt also mit Vorteil eine ringförmige, um den Fuß des Vorsprungs verlaufende Fläche bereit, die mit der Stirnfläche des Drehverbinders zusammenwirkt und auf den Arm ausgeübte Druckkräfte auf das Anschlusselement überträgt.

Eine erste Gegen-Radiallagerfläche des Drehverbinders kann durch die Wände einer in ihm verlaufenden Axialbohrung gebildet sein, die mit der zylindrischen Mantelfläche des Vorsprungs bevorzugt in Kontakt steht.

Eine zweite Gegen-Radiallagerfläche des Drehverbinders ist bevorzugt durch seine Mantelfläche, insbesondere an seinem zu dem freien Ende des Arms hin gewandten Ende, gebildet. Diese steht bevorzugt mit der um den Fuß des Vorsprungs herum angeordneten Erhebung in Kontakt. Die Mantelfläche des Drehverbinders weist mit Vorteil einen Bereich größeren Durchmessers auf, der von innen an dem Arm anliegt. Die Mantelfläche des Drehverbinders weist mit Vorteil einen Bereich kleineren Durchmessers auf, der ebenfalls im Inneren des Arms angeordnet sein kann und der in die um den Fuß des Vorsprungs herum angeordneten Erhebung des Anschlusselements lagernd eingreifen kann.

Das Anschlusselement stellt also bevorzugt einen um den Fuß des Vorsprungs verlaufende Erhebung bereit, die als Radiallagerfläche wirkt. Mit Vorteil greift der Drehverbinder in diese Erhebung ein und überträgt auf den Arm ausgeübte Kippkräfte auf diese Erhebung.

Das Anschlusselement stellt bevorzugt also mindestens eine Lagerfläche für den Drehverbinder bereit, die beabstandet zu dem Vorsprung um den Vorsprung herum, besonders bevorzugt um den Fuß des Vorsprungs herum, angeordnet ist.

Mit Vorteil ist eine drehbare Verbindung zwischen dem Arm und beiden seiner Anschlusselemente auf die gleiche Weise bewirkt. Durch die beiden Drehverbindungen kann das Verbindungsbauteil während des Befestigungsvorgangs mit Vorteil in die gewünschte Position gebracht und in dieser Position weiter bevorzugt in die gewünschte Rotationslage gebracht werden.

Mit Vorteil ist in der erfindungsgemäßen Befestigungsvorrichtung die Funktionalität von Klemmbauteil und Verbindungsbauteil von dem Befestigungsvorgang des Fahrrades gelöst und weiter bevorzugt das Problem von Bruch und Abtrennung während der Benutzung der Befestigungsvorrichtung eliminiert.

Die Drehbarkeit des Arms ist durch die Drehverbindung zu dem Klemmbauteil mit Vorteil unabhängig von der sicheren Klemmung des Klemmbauteils an dem Fahrradträger gewährleistet. Gleiches gilt mit Vorteil für das Verbindungsbauteil und die Befestigung an dem Fahrradrahmen.

Der Vorsprung ist mit Vorteil als Kupplungsstift ausgebildet und es sind weiter bevorzugt Verbindungsmittel vorgesehen, zur Verbindung des Kupplungsstifts mit dem Arm oder dem Drehverbinder. In der Ausführungsform mit Drehverbinder sind Verbindungsmittel vorgesehen, zur Verbindung des Kupplungsstifts mit dem Drehverbinder.

Der Kupplungsstift weist bevorzugt ein Gewinde, insbesondere Außengewinde auf, vorteilhafterweise an seinem freien Ende. Die Verbindungsmittel umfassen bevorzugt ein Gewindeelement, mit Vorteil eine Gewindemutter. Der Kupplungsstift ist mit Vorteil zumindest an seinem freien Ende aus Metall gefertigt. Die Verbindungsmittel sind mit Vorteil ebenfalls aus Metall gefertigt. Sie umfassen mit Vorteil eine Beilagscheibe.

Der Arm schließt mit Vorteil bündig mit dem Anschlusselement ab. Er reicht also bevorzugt bis an das Anschlusselement heran. Der Drehverbinder ist mit Vorteil von außen nicht sichtbar.

Die Erfindung betrifft auch einen Fahrradträger mit einer Vorrichtung nach einem der Ansprüche 1 bis 9.

Die Erfindung soll nun anhand eines in den Zeichnungen gezeigten Ausführungsbeispiels näher erläutert werden. Es zeigen:
- Fig. 1: eine perspektivische Explosionsdarstellung eines Ausführungsbeispiels einer erfindungsgemäßen Fahrradbefestigungsvorrichtung;
- Fig. 2: eine Ansicht wie in Fig. 1, jedoch in zusammengesetztem Zustand;
- Fig. 3: eine Seitendarstellung eines Details aus Fig. 2;
- Fig. 4: eine perspektivische Darstellung eines Klemmbauteils mit verbundenem Drehverbinder;
- Fig. 5: eine Darstellung wie in Fig. 4, wobei der Drehverbinder noch nicht mit dem Klemmbauteil verbunden ist;
- Fig. 6: eine perspektivische Darstellung eines Verbindungsbauteils mit daran befestigtem Drehverbinder;
- Fig. 7: eine Darstellung wie in Fig. 6 jedoch mit noch nicht verbundenem Drehverbinder;
- Fig. 8: eine perspektivische Darstellung einer an einem Fahrradträger montierten Fahrradbefestigungsvorrichtung;
- Fig. 9: eine perspektivische Darstellung eines aus dem Stand der Technik bekannten Fahrradträgers.

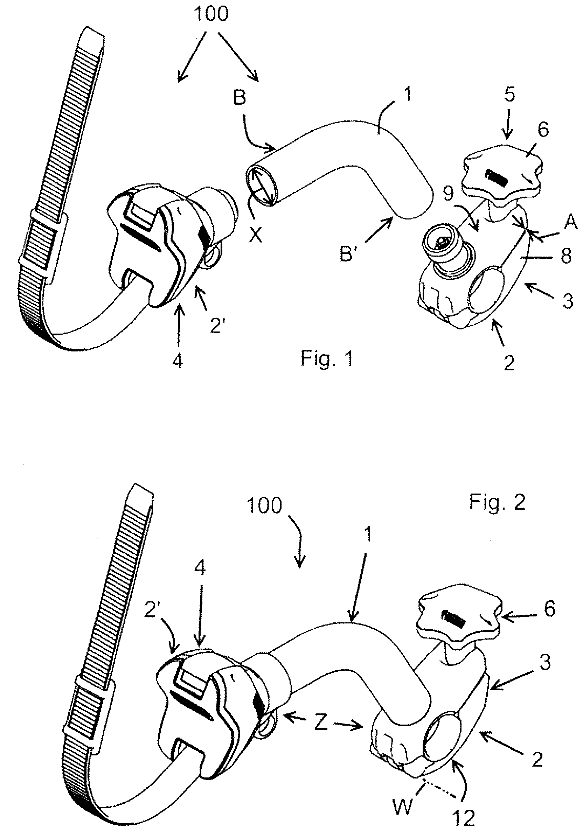

Wie die Figuren 1 bis 3 zeigen, umfasst das gezeigte Ausführungsbeispiel der als Ganzes mit 100 bezeichneten Fahrradbefestigungsvorrichtung einen gekrümmten Verbindungsarm 1, an dem auf jeder Seite jeweils ein Anschlusselement 2, 2' angeordnet ist. Eines der beiden Anschlusselemente 2 umfasst ein Klemmbauteil 3, zur Befestigung des Arms an einem Fahrradträger. Das andere der beiden Anschlusselemente 2' umfasst ein Verbindungsbauteil 4, zur Befestigung des Arms an einem Rohr eines Fahrradrahmens.

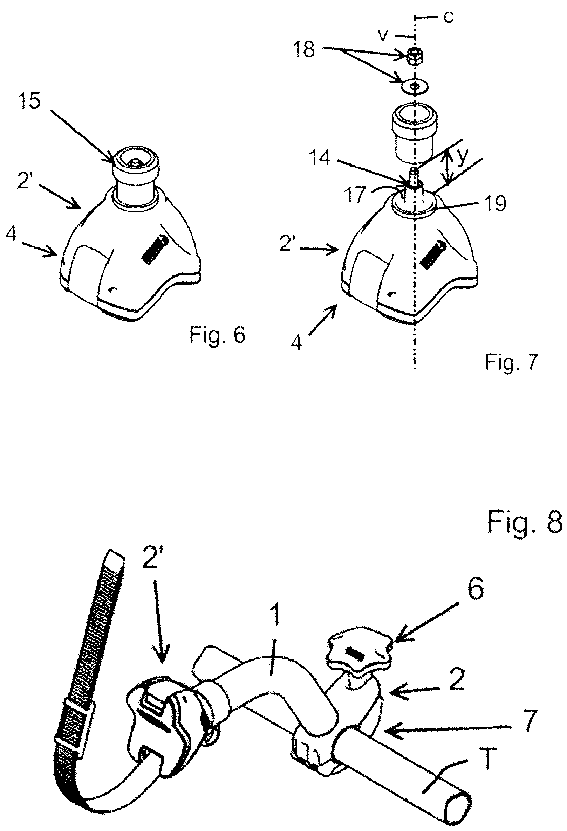

Das Klemmbauteil 3 umfasst eine Schelle 7, die zwei Backen 8, 9 umfasst, welche mittels eines Gelenks 13 um eine Gelenkachse W schwenkbar verbunden sind. Auf der der Gelenkseite 10 gegenüberliegenden Klemmschraubenseite 11 ist eine Klemmschraube 5 angeordnet, mit einem per Hand bedienbaren Drehknopf 6. Durch Drehen des Drehknopfs 6 kann der Abstand A zwischen den Backen 8, 9 verändert werden und die Schelle 7 damit enger oder weiter gestellt werden. Wie Fig. 8 zeigt, kann die Schelle 7 um ein Rohr eines Fahrradträgers T geklemmt sein und ist dann drehfest an diesem Rohr angeordnet.

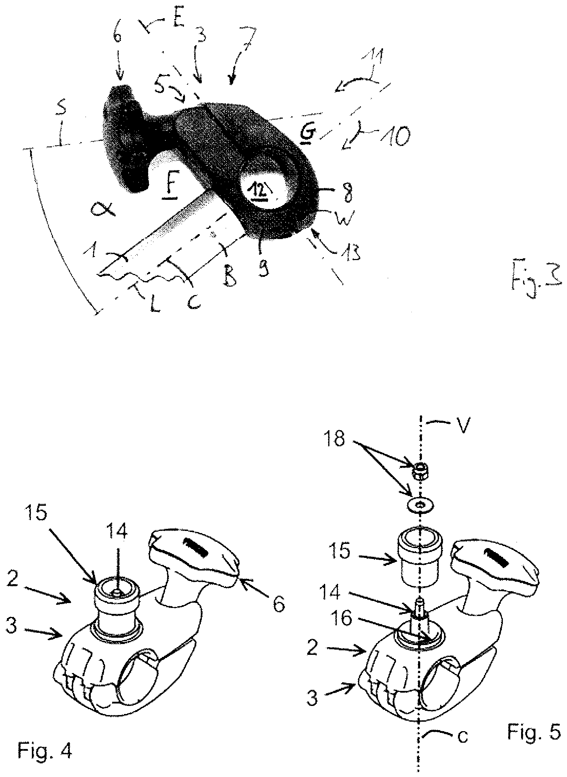

Etwa Fig. 3 zeigt, dass der Drehknopf 6 auf der dem Verbindungsarm 1 zugewandten Seite F des Klemmbauteils 3 angeordnet ist und nicht etwa auf der dem Verbindungsarm 1 abgewandten Seite G des Klemmbauteils 3.

Fig. 3 zeigt auch, dass die Backen 8, 9 eine Aufnahme 12 für den Fahrradträger aufweisen und dass sich die Backen 8, 9 auf der Klemmschraubenseite 11 der Aufnahme 12 weiter erstrecken als auf der Gelenkseite 10 der Aufnahme 12. Auf diese Weise ist auf der Klemmschraubenseite 11 Platz für den Drehknopf 6 geschaffen.

Wie Fig. 3 ebenfalls zeigt, ist der Winkel α zwischen der Längserstreckung S der Klemmschraube 5 und der Längsrichtung L des Arms 1 in seinem Verbindungsbereich kleiner als 45°. Im gezeigten Ausführungsbeispiel beträgt er etwa 30°. Ebenfalls erkennbar ist, dass die einander zugewandten Seiten der Backen 8, 9 parallel zu einer Ebene E verlaufen, die senkrecht zu der Längserstreckung L des Arms 1 im Verbindungsbereich B ausgerichtet ist. Es ist erkennbar, dass die Längserstreckung S der Klemmschraube 5 nicht senkrecht zu den einander zugewandten Seiten der Backen, also der Ebene E verläuft. Es hat sich gezeigt, dass die hiermit verbundenen geringfügigen Nachteile bei der Kraftübertragung zugunsten der besseren Bedienbarkeit des Drehknopfes 6 tolerierbar sind.

Die Figuren 2 bis 7 zeigen in Verbindung mit Fig. 1, dass eine drehbare Verbindung Z zwischen dem Arm 1 und dem Klemmbauteil 3 (Fig. 4, 5) sowie dem Verbindungsbauteil 4 (Fig. 6, 7) jeweils dadurch bewirkt ist, dass ein eine Drehachse C definierender Vorsprung 14 an dem Klemmbauteil 3 und dem Verbindungsbauteil 4 angeordnet ist. Der Vorsprung 14 erstreckt sich in den Verbindungsarm 1 und die Richtung V seiner Längserstreckung stimmt mit der Richtung der Längserstreckung L des Verbindungsarms 1 im Verbindungsbereich B, B' überein (siehe auch Fig. 3).

Der Vorsprung 14 ist nicht unmittelbar mit dem Arm 1 verbunden, sondern jeweils mittels eines Drehverbinders 15, der seinerseits fest mit dem Arm 1 verbunden ist. Dieser Drehverbinder 15 ist mit Hilfe des Vorsprungs 14 drehbar an dem Klemmbauteil 3 bzw. dem Verbindungsbauteil 4 gelagert.

Der Vorsprung 14 weist an seinem freien, metallenen Ende ein Außengewinde auf und es sind Verbindungsmittel 18 vorgesehen, die eine Beilagscheibe und eine Mutter umfassen, mit denen der Drehverbinder 15 mittels seines im Inneren angeordneten und in den Figuren nicht erkennbaren Anschlags befestigt ist. Der Drehverbinder hat eine etwa hohlzylindrische Form.

Aus den Figuren 1 und 7 geht hervor, dass der Vorsprung 14 eine Länge Y aufweist, die zumindest so groß wie der Durchmesser X des Arms 1 ist. Der Arm 1 ist durch ein gekrümmtes Aluminiumrohr 1 mit einem kreisförmigen Querschnitt gebildet.

Jedes Anschlusselement 2, 2' stellt eine Radiallagerfläche 16 und eine Axiallagerfläche 17 für den Drehverbinder 15 bereit, die jeweils beabstandet zu dem Vorsprung 14 um den Vorsprung 14 herum angeordnet sind (Fig. 4 bis 7). Die Radiallagerfläche 16 ist durch die innere Oberfläche einer hohl-zylindrischen Erhebung 19 des Anschlusselements 2, 2' gebildet.

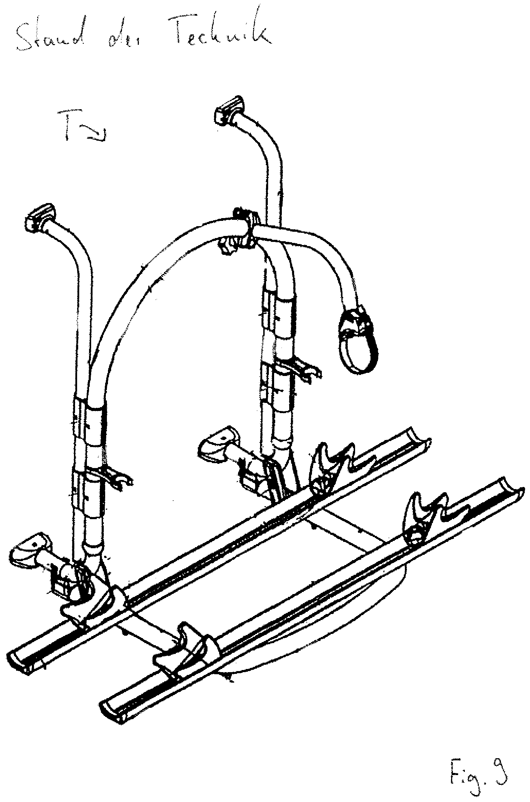

Fig. 9 zeigt einen aus dem Stand der Technik bekannten Fahrradträger T, an dem die erfindungsgemäße Fahrradbefestigungsvorrichtung 100 angeordnet werden könnte.

### Bezugszeichenliste:

- 100: Fahrradbefestigungsvorrichtung
- 1: Verbindungsarm
- 2,2': Anschlusselemente
- 3: Klemmbauteil
- 4: Verbindungsbauteil
- 5: Klemmschraube
- 6: Drehknopf
- 7: Schelle
- 8,9: Backen
- 10: Gelenkseite
- 11: Klemmschraubenseite
- 12: Aufnahme für Fahrradträger
- 13: Gelenk der Schelle
- 14: Vorsprung
- 15: Drehverbinder
- 16, 17: Lagerflächen
- 18: Verbindungsmittel
- 19: Erhebung

- α: Winkel
- A: Abstand der Backen
- B, B': Verbindungsbereich des Arms
- C: Drehachse der Drehverbindung des Arms an dem Anschlusselement
- E: Senkrecht zur Längserstreckung des Arms im Verbindungsbereich ausgerichtete Ebene
- F: dem Verbindungsarm zugwandte Seite des Klemmbauteils
- G: dem Verbindungsarm abgewandte Seite des Klemmbauteils
- L: Längserstreckung des Arms im Verbindungsbereich
- S: Längserstreckung der Klemmschraube
- T: Fahrradträger
- V: Längserstreckung des Vorsprungs
- W: Gelenkachse
- X: Durchmesser des Arms
- Y: Länge des Vorsprungs
- Z: drehbare Verbindung

## Patentansprüche

1. Fahrradbefestigungsvorrichtung (100) zur Befestigung eines Fahrrades an einem Fahrradträger, mit einem Verbindungsarm (1), an dem Anschlusselemente (2, 2') angeordnet sind, die ein Klemmbauteil (3) zur Verbindung des Arms (1) mit dem Fahrradträger umfassen, **dadurch gekennzeichnet, dass** das Klemmbauteil (3) eine mittels eines Drehknopfes (6) per Hand bedienbare Klemmschraube (5) und eine Schelle (7) mit zwei Backen (8, 9) aufweist, wobei die Backen (8, 9) an einer Gelenkseite (10) der Schelle (7) schwenkbar zueinander gelagert sind und die andere Seite der Schelle (7) als Klemmschraubenseite (11), auf der die Klemmschraube (5) wirkt, ausgebildet ist, und der Abstand (A) der Backen (8, 9) durch Betätigen des Drehknopfes (6) veränderbar ist, wobei der Drehknopf (6) auf der dem Verbindungsarm (1) zugewandten Seite (F) des Klemmbauteils (3) angeordnet ist.

2. Vorrichtung nach Anspruch 1, **dadurch gekennzeichnet, dass** die Backen (8, 9) eine Aufnahme (12) für den Fahrradträger aufweisen und sich die Backen auf der Klemmschraubenseite (11) weiter erstrecken, als auf der Gelenkseite (10).

3. Fahrradbefestigungsvorrichtung (100) nach einem der Ansprüche 1 oder 2, **dadurch gekennzeichnet, dass** zwischen dem Verbindungsarm (1) und dem Anschlusselement (2, 2') eine drehbare Verbindung (Z) vorgesehen ist, die dadurch bewirkt ist, dass an dem Anschlusselement (2, 2') ein eine Drehachse (C) definierender Vorsprung (14) vorgesehen ist, der sich in den Verbindungsarm (1) erstreckt.

4. Vorrichtung nach Anspruch 3, **dadurch gekennzeichnet, dass** der Verbindungsarm (1) fest mit einem Drehverbinder (15) verbunden ist, der drehbar an einem Anschlusselement (2, 2') gelagert ist.

5. Vorrichtung nach Anspruch 4, **dadurch gekennzeichnet, dass** das Anschlusselement (2, 2') mindestens eine Lagerfläche (16, 17) für den Drehverbinder (15) bereitstellt, die beabstandet zu dem Vorsprung (14) um den Vorsprung (14) herum angeordnet ist.

6. Fahrradträger mit einer Vorrichtung nach einem der voranstehenden Ansprüche.

## Claims

1. A bicycle fastening device (100) for fastening a bicycle onto a bicycle carrier, having a connecting arm (1) on which linking elements (2, 2') that comprise a clamping member (3) for connecting the arm (1) to the bicycle carrier are arranged, **characterized in that** the clamping member (3) comprises a clamping screw (5) that can be operated by hand by means of a turning knob (6), as well as a clamp (7) having two jaws (8, 9), wherein the jaws (8, 9) are mounted on a hinged side (10) of the clamp (7) so as to be able to pivot relative to one another, and the other side of the clamp (7) is configured as a clamping screw side (11) on which the clamping screw (5) acts, and the distance (A) between the jaws (8, 9) can be changed by actuation of the turning knob (6), wherein the turning knob (6) is arranged on the side (F) of the clamping member (3) that faces the connecting arm (1).

2. The device according to claim 1, **characterized in that** the jaws (8, 9) have a receptacle (12) for the bicycle carrier, and the jaws extend further on the clamping screw side (11) than on the hinged side (10).

3. The bicycle fastening device (100) according to either claim 1 or 2, **characterized in that** a rotatable connection (Z), achieved by providing-on the linking element (2, 2')-a projection (14) that defines a rotational axis (C) and extends into the connecting arm (1), is provided between the connecting arm (1) and the linking element (2, 2').

4. The device according to claim 3, **characterized in that** the connecting arm (1) is fixedly connected to a rotary connector (15) that is rotatably mounted onto a linking element (2, 2').

5. The device according to claim 4, **characterized in that** the linking element (2, 2') provides at least one bearing surface (16, 17) for the rotary connector (15) that is arranged about the projection (14) so as to be spaced apart from the projection (14).

6. A bicycle carrier comprising the device according to any of the preceding claims.

## Revendications

1. Dispositif de fixation de vélo (100) pour la fixation d'un vélo sur un porte-vélo, avec un bras de liaison (1) sur lequel sont disposés des éléments de raccordement (2, 2') comportant une pièce de serrage (3) pour relier le bras (1) au porte-vélo, **caractérisé en ce que** la pièce de serrage (3) présente une vis de serrage (5) actionnable manuellement au moyen d'un bouton rotatif (6) et un collier (7) avec deux mâchoires (8, 9), dans lequel les mâchoires (8, 9) sont montées de façon pivotante l'une par rapport à l'autre sur un côté d'articulation (10) du collier (7) et dans lequel l'autre côté du collier (7) est conçu comme un côté de vis de serrage (11) sur lequel agit la vis de serrage (5), et l'écart (A) entre les mâchoires (8, 9) peut être modifié en actionnant le bouton rotatif (6), dans lequel le bouton rotatif (6) est disposé sur le côté (F) de la pièce de serrage (3) tourné vers le bras de liaison (1).

2. Dispositif selon la revendication 1, **caractérisé en ce que** les mâchoires (8, 9) présentent un logement (12) pour le porte-vélo et les mâchoires s'étendent plus loin sur le côté de vis de serrage (11) que sur le côté d'articulation (10).

3. Dispositif de fixation de vélo (100) selon l'une des revendications 1 ou 2, **caractérisé en ce qu'**une liaison rotative (Z) est prévue entre le bras de liaison (1) et l'élément de raccordement (2, 2'), laquelle est réalisée par une saillie (14) définissant un axe de rotation (C) sur l'élément de raccordement (2, 2') et s'étendant dans le bras de liaison (1).

4. Dispositif selon la revendication 3, **caractérisé en ce que** le bras de liaison (1) est relié fixement à un connecteur rotatif (15) monté de façon rotative sur un élément de raccordement (2, 2').

5. Dispositif selon la revendication 4, **caractérisé en ce que** l'élément de raccordement (2, 2') présente au moins une surface de support (16, 16) pour le connecteur rotatif (15), laquelle est disposée à distance de la saillie (14) autour de la saillie (14).

6. Porte-vélo avec un dispositif selon l'une des revendications précédentes.
